(19) **Europäisches Patentamt / European Patent Office / Office européen des brevets**

(11) **EP 4 657 386 A1**

(12) **EUROPEAN PATENT APPLICATION**

(43) Date of publication:
**03.12.2025 Bulletin 2025/49**

(21) Application number: **24179139.1**

(22) Date of filing: **30.05.2024**

(51) International Patent Classification (IPC):
**G06V 10/764** (2022.01)   **G06V 10/774** (2022.01)
**G06V 10/82** (2022.01)   **G06V 20/70** (2022.01)

(52) Cooperative Patent Classification (CPC):
**G06V 10/82; G06V 10/764; G06V 10/774;
G06V 20/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **TOYOTA JIDOSHA KABUSHIKI KAISHA**
**Aichi-ken 471-8571 (JP)**
• **Max-Planck-Gesellschaft zur Förderung der
Wissenschaften e.V.**
**80539 München (DE)**

(72) Inventors:
• **OLMEDA REINO, Daniel**
**1140 Brussels (BE)**

• **DAS, Anurag**
**80539 Munich (DE)**
• **HU, Xinting**
**80539 Munich (DE)**
• **JIANG, Li**
**80539 Munich (DE)**
• **SCHIELE, Bernt**
**80539 Munich (DE)**

(74) Representative: **Cabinet Beau de Loménie**
**103, rue de Grenelle**
**75340 Paris Cedex 07 (FR)**

Remarks:
Amended claims in accordance with Rule 137(2)
EPC.

(54) **A METHOD FOR TRAINING A SEMANTIC SEGMENTATION MODEL OF AN IMAGE**

(57)     A method (20) for training a semantic segmentation model of an image, comprising:
- a) obtaining (21) a set of text queries ($\hat{t}$) and a set of mask queries (m) for each class label of a series of class label of the model;
- b) augmenting (22) the mask queries (m) with both visual and textual information by processing the text queries ($\hat{t}$), the mask queries (m) and features of the image;
- c) calculating (23) a pairwise similarity between each augmented mask query and each text query ($\hat{t}$); and
- d) aligning (24) each mask query (m) with the text query ($\hat{t}$) that exhibits the highest pairwise similarity with the mask query (m) and that relates to a same class label among the series of class label of the model.

FIG.2

EP 4 657 386 A1

**Description**

BACKGROUND OF THE INVENTION

1. Field of the invention

The present disclosure relates to the field of machine learning, specifically focusing on computer vision and image processing. In particular, the invention relates to a method and an apparatus for training a semantic segmentation model of an image.

2. Description of Related Art

Image segmentation plays an important role in various domains such as automotive traffic management, medical imaging, and satellite imagery analysis. This process involves partitioning images into meaningful segments to facilitate tasks like object detection, tracking, and analysis. For example, in automotive traffic management, segmentation aids in detecting vehicles, pedestrians, and road markings, essential for tasks like autonomous driving and traffic flow optimization.

One specific type of image segmentation is semantic segmentation, a computer vision task that involves partitioning an image into multiple segments or regions and assigning a semantic label to each segment. Unlike simple image classification, where the goal is to assign a single label to the entire image, semantic segmentation aims to provide a pixel-level understanding of the scene by labeling each pixel with the corresponding class. For example, given an input image, the objective is to classify each pixel into one of several predefined classes, such as "car", "person", "road", etc.

Thus, semantic segmentation is particularly relevant to advanced driver-assistance systems (ADAS) in the automotive industry. ADAS systems rely on real-time perception of the surrounding environment to enhance driving safety and comfort. Semantic segmentation enables ADAS systems to understand the scene by identifying and classifying different objects and regions in the environment. To this end, deep neural networks (DNNs) have been widely used in semantic segmentation, and specifically Convolutional neural networks (CNNs) due their ability to learn spatial hierarchies of features. These networks typically consist of encoder-decoder architectures, where the encoder extracts high-level features from the input image, and the encoder generates pixelwise predictions based on those features.

However, as ADAS tasks increase and the demand for higher accuracy grows, CNNs encounter diminishing returns in performance. In fact, one significant issue with CNNs in ADAS is their limited ability to capture global context in images. ADAS tasks often require understanding the entire scene and context, which may involve objects at different distances and orientations. CNNs, while effective at capturing local features through convolutional operations, struggle to incorporate global context effectively. This limitation leads to inaccuracies in tasks such as object recognition, especially in scenarios with complex or cluttered environments.

As a solution, Vision-Language Models (VLMs) represent a significant advancement in artificial intelligence, enabling machines to comprehend both visual and textual information simultaneously. These models are designed to learn joint representations of images and corresponding textual descriptions through extensive pretraining on diverse datasets. CLIP (Contrastive Language-Image Pretraining) is a notable example of VLMs and its functioning is more detailed in the following document for example: Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In international conference on machine learning, pages 8748-8763. PMLR, 2021.

More specifically, CLIP employs contrastive learning techniques to associate images with their textual descriptions, aiming to maximize the similarity between correct image-text pairs while minimizing similarity with incorrect pairs. This approach enables CLIP to effectively understand the content of images across various concepts, demonstrating superior performance compared to traditional methods relying solely on ImageNet pretraining.

Incorporating CLIP into semantic segmentation involves pixel-text alignment. In this approach, each pixel feature is paired with the text embedding of its corresponding ground truth class label. However, CLIP's pretraining primarily focuses on global image-text matching, while pixel-text alignment in semantic segmentation emphasizes detailed, pixel-specific visual information. Additionally, due to computational limitations, pixel-text alignment often operates on low-resolution image features. This reduction in image feature resolution, caused by the network's image encoder stride and pooling operations, frequently leads to the blurring of boundaries between different classes. For instance, a region containing both a person and a car is indiscriminately labeled as "car", resulting in ambiguous labeling in overlapping class regions and misalignment with text embeddings.

Thus, there is a need to explore other methods that address the limitations of existing approaches in semantic segmentation and more particularly in pixel-text alignment.

SUMMARY

The object of the present invention is to at least substantially remedy the above-mentioned drawbacks.

In this respect, the present disclosure relates to a method for training a semantic segmentation model of an image, comprising:

- a) obtaining a set of text queries and a set of mask queries for each class label of a series of class label of the model;

- b) augmenting the mask queries with both visual and textual information by processing the text queries, the mask queries and features of the image;

- c) calculating a pairwise similarity between each augmented mask query and each text query; and

- d) aligning each mask query with the text query that exhibits the highest pairwise similarity with the mask query and that relates to a same class label among the series of class label of the model.

For conciseness, the method is referred to hereinafter as the training method. Further, as used herein and unless the context indicates otherwise, "a", "an", and "the" are intended to refer to "at least one" or "each" and to include plural forms as well.

In the context of semantic segmentation, text queries play an important role in guiding the model to assign appropriate class labels to image regions. By associating textual descriptions with corresponding visual features, the model learns to recognize and segment objects based on their semantic content. More specifically, Text queries refer to textual descriptions or labels associated with specific semantic classes within the semantic segmentation model. These descriptions are typically provided as natural language, text, such as words or phrases, and serve as reference for identifying and categorizing image regions during the training process. Text queries may be represented as vectors in a high-dimensional embedding space, where each dimension encodes semantic information related to a particular class.

Mask queries represent spatial masks that delineate regions of interest within the image corresponding to specific semantic class. These masks are typically binary matrices or arrays, where each pixel or voxel is assigned a value indicating whether it belongs to the target class or not. In other words, mask queries encode spatial information about the location and extent of objects or regions within the image. They provide ground truth annotations that guide the training of the semantic segmentation model, allowing it to learn to segment images accurately.

The method gathers a series of text queries and mask queries for each class label within the semantic segmentation model. It should be noted that the language and image encoders, well-known by a person skilled in the art in performing this method may be of different well-known types; For example, the image encoder may be a CLIP or BERT or ResNet.

These queries serve as references for associating textual descriptions with specific image regions during the training process. Following the query acquisition, the mask queries are enriched with both visual and textual information. This augmentation process involves processing the text queries, mask queries, and features extracted from the input image. By combining visual features from the image with textual information from the text queries, the mask queries become more comprehensive representations of the image content. In other words, this augmentation enhances the comprehensiveness of the mask queries, enabling the model to better understand and segment the semantic content of the image.

Once the mask queries are augmented, the method calculates pairwise similarity scores between each augmented mask query and every text query in the set. This similarity computation quantifies the degree of correspondence between the textual description and the visual features represented by the mask queries.

Finally, the method aligns each mask query with the text query that exhibits the highest pairwise similarity. This alignment process ensures that each mask query is associated with the most relevant textual description, specifically one that corresponds to the same class label within the model's series of class labels. By aligning mask queries with their most similar text queries, the semantic segmentation model learns to accurately assign class labels to image regions during training.

Optionally, the method comprises a step of verifying the semantic segmentation of the image by using a labeled dataset.

The step of verifying the image semantic segmentation involves evaluating the performance of the semantic segmentation model in segmenting images by comparing its predicted segmentation masks with the ground truth annotations provided in a labeled dataset. This comparison assesses the accuracy, precision, and overall quality of the semantic segmentation model's segmentation outputs, and then provides insights into areas where the semantic segmentation model performs well and areas where it may need improvement. Accordingly, the semantic segmentation model can be iteratively fine-tuned and its hyper-parameters adjusted.

Optionally, augmenting the mask queries comprises reducing the dimension of each text query in accordance with the scale of the mask queries.

Augmenting the mask queries involves a process of dimension reduction applied to each text query to align it with the scale of the mask queries. This reduction ensures that the textual information represented by the text queries is compatible with the spatial annotations provided by the mask queries. Specifically, the dimension of each text query is adjusted to match the scale of the mask tokens, typically through techniques such as MultiLayer Perceptron (MLP) operations. By reducing the dimensionality of the text queries in this manner, the computational efficiency is improved.

For instance, such reduction may be formulated as:

$$\hat{t} = \text{MLP}(t), \quad t \in \mathbb{R}^{C \times 1024} \quad \text{and} \quad \hat{t} \in \mathbb{R}^{C \times 256}. \quad (1)$$

wherein

t is text embeddings with $t = [t_1,..., t_C]$; and
C denotes the number of classes.

Optionally, the method comprises concatenating the mask queries and the text queries before processing them.

The method involves combining the mask queries and the text queries into a single set before further processing. This concatenation step allows for the integration of both spatial annotations provided by the mask queries and textual descriptions associated with specific semantic classes represented by the text queries. As explained above, prior to concatenation, the text queries may undergo dimension reduction to ensure compatibility with the scale of the mask queries. Once concatenated, this unified set of queries serves as the input for subsequent steps. For instance, the resulting concatenated queries q are expressed as:

$$q = [\hat{t}, m], \quad q \in \mathbb{R}^{(C+N) \times 256}. \quad (2)$$

wherein:

m represent the mask queries, $m = [m_1,..., m_N]$ ; and
N denotes the number of queries.

Optionally, augmenting the mask queries comprises using a mask decoder transformer.

The transformer is a component designed specifically for enhancing the representation of spatial annotations provided by the mask queries. It operates by processing the mask queries alongside with other relevant information, such as image features and textual embeddings, to refine and augment the spatial annotations. The mask decoder transformer applies a series of transformations and computations to the mask queries, enabling them to capture spatial relationships and contextual information within the image data. The augmented mask queries become more comprehensive representations of the image content, facilitating improved semantic segmentation performance.

Optionally, augmenting the mask queries comprises executing cross-attention and self-attention strategies at each layer of the mask decoder transformer.

During cross-attention, the mask queries interact with external information (image features and text queries), allowing them to adapt and incorporate context-specific details from the input data. This interaction facilitates the alignment of the mask queries with the overall content of the image, enhancing their ability to capture relevant semantic information. In contrast, self-attention enables the mask queries to focus more on their own relationships and contextual dependencies within the input data. This mechanism allows the mask queries to refine their representation based on their interactions with other mask queries and the surrounding context within the image.

For instance, the mask decoder transformer may comprise L layers wherein the set of queries q undergoes a series of layer-wise attention refinements. At each layer i E {0, 1, ..., L-1}, the cross-attention and the self-attention functions (mechanisms) may be respectively expressed as follows:

$$q_{cross}^{(i)} = \text{CrossAttn}(q^{(i)}, k^{(i)}, v^{(i)}), \quad (3)$$

$$q^{(i+1)} = \text{SelfAttn}(q_{cross}^{(i)}) \quad (4)$$

wherein

$k^{(i)}$, $v^{(i)}$ are the $i^{th}$ level image features from the mask decoder;
CrossAttn () is the cross-attention function; and
SelfAttn () is the self-attention function.

By executing cross-attention and self-attention strategies at each layer of the mask decoder transformer, the mask queries undergo iterative refinement.

Optionally, the method comprises projecting the augmented mask queries and the text queries before performing the calculating step.

This projection is advantageous for ensuring that the queries remain compatible with CLIP model's feature space and can effectively interact with such model's representations. To this end and for instance, MLP may be used to project both the augmented mask queries (m) and the text queries ($\hat{t}$) back into the CLIP feature space. Mathematically, this projection may be represented as follows:

$$ \mathbf{t}' = \mathrm{MLP}(\hat{\mathbf{t}}) + \mathbf{t}^0, \quad \mathbf{m}' = \mathrm{MLP}(\mathbf{m}) \qquad (5) $$

Optionally, the pairwise similarity is refined through a contrastive loss function.

This contrastive loss function is employed to enhance the discrimination between positive and negative pairs of queries. Positive pairs correspond to a mask query and a text query corresponding to the actual class of that mask, while negative pairs include the mask query and all other text queries that do not correspond to the actual class of that mask. It thus encourages similar pairs, such as matching text and mask queries, to have low loss values, while dissimilar pairs have higher loss values. In other words, the semantic segmentation model learns to effectively align text and mask queries that correspond to the same class label, while simultaneously differentiating them from queries associated with different class labels. In essence, the contrastive loss function facilitates the fine-tuning of the pairwise similarity computation, leading to improved accuracy and performance in semantic segmentation tasks.

For instance, the pairwise similarity score S between each projected mask query $m'_i$, ($i \in \{1, \cdots, N\}$) and text query $t'_j$, ($j \in \{1, \cdots, C\}$) may be represented as a dot product normalized by a temperature parameter $\tau$ as follows:

$$ S(m'_i, t'_j) = \frac{m'_i \cdot t'_j}{\tau}. \qquad (6) $$

In this example, the contrastive loss function $L_{sim}$ which is, as described above, designed to maximize the similarity for the positive pair and minimize it for negative pairs, may be defined as follows:

$$ \mathcal{L}_{sim} = -\frac{1}{N} \sum_{i=1}^{N} \sum_{j=1}^{C} \Big[ y_{ij} \cdot $$
$$ \log \frac{\exp\left(S(m'_i, t'_j)\right)}{\exp\left(S(m'_i, t'_j)\right) + \sum\limits_{\substack{r \in \{1, \cdots, C\} \\ r \neq j}} \exp\left(S(m'_i, t'_r)\right)} \Big] \qquad (7) $$

Here, $y_{ij}$ equals 1 for the ground truth class label and 0 otherwise.

The contrastive loss function $L_{sim}$ may also be defined as follows:

$$ \mathcal{L}_{sim} = -\frac{1}{N} \sum_{i=1}^{N} \sum_{j=1}^{C} \Big[ y_{ij} \cdot $$
$$ \log \frac{\exp\left(S(m'_i, t'_{j,\tilde{k}})\right)}{\exp\left(S(m'_i, t'_{j,\tilde{k}})\right) + \sum\limits_{\substack{r \in \{1, \cdots C\}, k \in \{1, \cdots K\} \\ \{r,k\} \neq \{j,\tilde{k}\}}} \exp\left(S(m'_i, t'_{r,k})\right)} \Big] \qquad (8) $$

wherein the positive text query for mask token $m'_i$ with ground truth class $j$ is defined as $t'_{j,\tilde{k}}$ such that $\tilde{k} = \arg\max_{k\in\{1,\cdots,K\}} S(m'_i, t'_{j,k})$; and

K is unique prompts shared across C classes.

In this example, all other text queries except the positive one (totaling K x C - 1) are treated as negative.

The contrastive loss function $L_{sim}$ may also be defined as follows:

$$\mathcal{L}_{sim} = -\frac{1}{N} \sum_{i=1}^{N} \sum_{j=1}^{C} \left[ y_{ij} \cdot \right.$$

$$\left. \log \frac{\exp\left(S(m'_i, t'_{j,\tilde{k}})\right)}{\exp\left(S(m'_i, t'_{j,\tilde{k}})\right) + \sum_{\substack{r\in\{1,\cdots C\}, k\in\{1,\cdots K\} \\ r\neq j}} \exp\left(S(m'_i, t'_{r,k})\right)} \right] \quad (9)$$

In this example, text queries not belonging to the ground truth class (totaling K x (C- 1) are treated as negative.

Optionally, the model is a language-guided semantic segmentation model.

The present invention further relates to a computer program set including instructions for executing the steps of the above-described method when said program set is executed by one computer.

This program set can use any programming language and take the form of source code, object code, or a code intermediate between source code and object code, such as a partially compiled form or any desirable form.

The present invention further relates to an apparatus for training a semantic segmentation model of an image, comprising:

- an obtaining module configured to obtain a set of text queries and a set of mask queries for each class label of series of class label of the model ;

- an augmenting module configured to augment the mask queries with both visual and textual information by processing the text queries, the mask queries and the features of the image ;

- a calculating module configured to calculate a pairwise similarity between each augmented mask query and each text query ; and

- an aligning module configured to align each mask query with the text query that exhibits the highest pairwise similarity with the mask query and that relates to a same class label among the series of class label of the model.

The apparatus referred to hereinafter as the training apparatus, may be configured to carry out the above-mentioned training method and may have part of all of the above-described features. For instance, at least one of said modules (one or more modules among these modules) is located on a cloud which typically refers to a network of remote servers accessed over the internet to store, manage and process data rather than on a local server or personal computer. Accordingly, one specific module or a plurality of modules of the training apparatus is hosted or operated within the cloud rather than residing on a local server. It means that the functions or operation of the or these module(s) are carried out using cloud-based resources or services.

Of course, the training apparatus may have a hardware structure of a computer which refers to the physical components and architecture that make up the computer system. These components include for example the central processing unit (CPU) and memory modules such as RAM for "Random-Access Memory").

The present invention further relates to a vehicle comprising the above-described apparatus.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 is a block diagram of a training apparatus according to an embodiment of the present invention; and
- FIG.2 is a flowchart of a training method according to an embodiment of the present invention.

DETAILED DESCRIPTION OF EMBODIMENTS

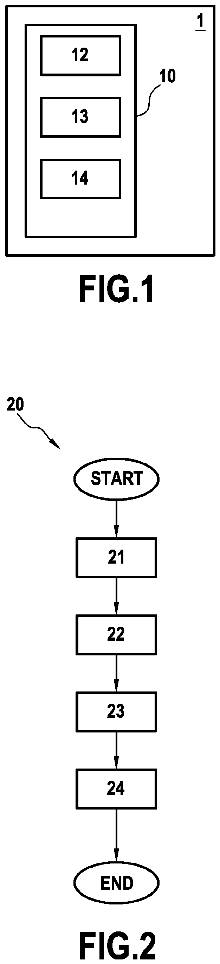

Figure 1 shows a block diagram of a training apparatus 10 comprising an obtaining module 11, an augmenting module 12, a calculating module 13 and an aligning module 14 according to embodiments of the present invention. The training apparatus 10 may be located inside or outside a vehicle 1. The vehicle 1 may be directed to an apparatus capable of transporting people or objects from one location to another, such as a car or a motorcycle, and may be categorized into different levels based on the extent of automation.

Alternatively or additionally, one module or a plurality of modules among the modules of the training apparatus 10 may be hosted or operated within a cloud (extern server) rather than residing on a local server.

The training apparatus 10 may be configured to train a semantic segmentation model of an image, the model being a language-guided semantic segmentation model. Accordingly, the training apparatus 10 aims to maximize the semantic segmentation model's performance and efficiency in image segmentation tasks through efficient training.

The training apparatus 10 may comprise an electronic circuit, a processor (shared, dedicated, or group), a combinational logic circuit, a memory that executes one or more software programs, and/or other suitable components that provide the described functionality. In other words, the training apparatus 10 may be connected to a memory, which may store data, e.g. at least one computer program, which, when executed, carries out the training method according to the present invention.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk. Alternatively, the memory can be integrated circuit in which the program is incorporated, the circuit being adapted to execute the training method or to be used in its execution.

The obtaining module 11 is a module configured to obtain a set of text queries and a set of mask queries for each class label of series of class label of the model. In particular, the obtaining module 11 gathers a series of text queries and mask queries for each class label within the semantic segmentation model. These queries serve as references for associating textual descriptions with specific image regions during the training process performed by the training apparatus 10.

The obtaining module 11 may be implemented as software running on the training apparatus 10 or may be implemented partially or fully as a hardware element of the training apparatus 10.

The augmenting module 12 is a module configured to augment the mask queries with both visual and textual information by processing the text queries, the mask queries and features of the image. In other words, following the query acquisition by the obtaining module 11, the augmenting module 12 is configured to enrich the mask queries with both visual and textual information. This augmentation process involves processing the text queries, mask queries, and features extracted from the input image. By combining visual features from the image with textual information from the text queries, the mask queries become more comprehensive representations of the image content. In other words, this augmentation enhances the comprehensiveness of the mask queries, enabling the model to better understand and segment the semantic content of the image.

To this end, the augmenting module 12 may be configured to reduce the dimension of each text query in accordance with the scale of the mask queries. This reduction ensures that the textual information represented by the text queries is compatible with the spatial annotations provided by the mask queries. Specifically, the dimension of each text query is adjusted to match the scale of the mask tokens, typically through techniques such as MultiLayer Perceptron (MLP) operations performed by the augmenting module 12. By reducing the dimensionality of the text queries in this manner, the computational efficiency is improved.

For instance, such reduction may be formulated as:

$$\hat{t} = \mathrm{MLP}(t), \quad t \in \mathbb{R}^{C \times 1024} \quad \text{and} \quad \hat{t} \in \mathbb{R}^{C \times 256}. \quad (1)$$

wherein

t is text embeddings with $t = [t_1, ..., t_C]$; and
C denotes the number of classes.

The augmenting module 12 may be further configured to concatenate the mask queries and the text queries. This concatenation performed by the augmenting module 12 allows for the integration of both spatial annotations provided by the mask queries and textual descriptions associated with specific semantic classes represented by the text queries. As explained above, prior to concatenation, the text queries may undergo dimension reduction to ensure compatibility with the scale of the mask queries. Once concatenated, this unified set of queries serves as the input for subsequent steps. For instance, the resulting concatenated queries q are expressed as:

$$q = [\hat{t}, m], \quad q \in \mathbb{R}^{(C+N)\times 256}. \qquad (2)$$

wherein:

m represent the mask queries, $m = [m_1,..., m_N]$ ; and
N denotes the number of queries.

The augmenting module 12 may comprises a mask decoder transformer and accordingly may be further configured to execute cross-attention and self-attention strategies at each layer of the mask decoder transformer.

In particular, during cross-attention performed by the augmenting module 12, the mask queries interact with external information (image features and text queries), allowing them to adapt and incorporate context-specific details from the input data. This interaction facilitates the alignment of the mask queries with the overall content of the image, enhancing their ability to capture relevant semantic information. In contrast, self-attention performed by the augmenting module 12 enables the mask queries to focus more on their own relationships and contextual dependencies within the input data. This mechanism allows the mask queries to refine their representation based on their interactions with other mask queries and the surrounding context within the image.

For instance, the mask decoder transformer of the augmenting module 12 may comprise L layers wherein the set of queries q undergoes a series of layer-wise attention refinements. At each layer $i \in \{0, 1, ..., L-1\}$, the cross-attention and the self-attention functions (mechanisms) may be respectively expressed as follows:

$$q_{cross}^{(i)} = \texttt{CrossAttn}(q^{(i)}, k^{(i)}, v^{(i)}), \qquad (3)$$

$$q^{(i+1)} = \texttt{SelfAttn}(q_{cross}^{(i)}) \qquad (4)$$

wherein

$k^{(i)}$, $v^{(i)}$ are the $i^{th}$ level image features from the mask decoder;
CrossAttn () is the cross-attention function; and
SelfAttn () is the self-attention function.

By executing cross-attention and self-attention strategies at each layer of the mask decoder transformer, the mask queries undergo iterative refinement.

The augmenting module 12 is further configured to project the augmented mask queries and the text queries before sending them to the calculating module 13. This projection is advantageous for ensuring that the queries remain compatible with CLIP model's feature space and can effectively interact with such model's representations. To this end and for instance, MLP may be used by the augmenting module 12 to project both the augmented mask queries (m) and the text queries ($\hat{t}$) back into the CLIP feature space. Mathematically, this projection may be represented as follows:

$$t' = \texttt{MLP}(\hat{t}) + t^0, \quad m' = \texttt{MLP}(m) \qquad (5)$$

The augmenting module 12 may be implemented as software running on the training apparatus 10 or may be implemented partially or fully as hardware element of the training apparatus 10. In particular, the training apparatus 10 may comprise a program that includes both the obtaining module 11 and the augmenting module 12. Alternatively and without limitation, the obtaining module 11 may be realized as independent program (in particular, besides a program forming the augmenting module 12).

The calculating module 13 is a module configured to calculate a pairwise similarity between each augmented mask query and each text query. More precisely, the calculated pairwise similarity is refined through a contrastive loss function. This contrastive loss function is employed by the calculating module 13 to enhance the discrimination between positive and negative pairs of queries. It thus encourages similar pairs, such as matching text and mask queries, to have low loss values, while dissimilar pairs have higher loss values. In other words, the semantic segmentation model learns to effectively align text and mask queries that correspond to the same class label, while simultaneously differentiating them from queries associated with different class labels. In essence, the contrastive loss function facilitates the fine-tuning of the pairwise similarity computation, leading to improved accuracy and performance in semantic segmentation tasks.

For instance, the pairwise similarity score S between each projected mask query $m'_i$, ($i \in \{1, \cdots, N\}$) and text query $t'_j$, ($j \in \{1, \cdots, C\}$) may be represented as a dot product normalized by a temperature parameter $\tau$ as follows:

$$S(m'_i, t'_j) = \frac{m'_i \cdot t'_j}{\tau}. \qquad (6)$$

In this example, the contrastive loss function $L_{sim}$ which is, as described above, designed to maximize the similarity for the positive pair and minimize it for negative pairs, may be defined as follows:

$$\mathcal{L}_{sim} = -\frac{1}{N} \sum_{i=1}^{N} \sum_{j=1}^{C} \left[ y_{ij} \cdot \right.$$
$$\left. \log \frac{\exp\left(S(m'_i, t'_j)\right)}{\exp\left(S(m'_i, t'_j)\right) + \sum_{\substack{r \in \{1, \cdots, C\} \\ r \neq j}} \exp\left(S(m'_i, t'_r)\right)} \right] \qquad (7)$$

Here, $y_{ij}$ equals 1 for the ground truth class label and 0 otherwise.

The contrastive loss function $L_{sim}$ may also be defined as follows:

$$\mathcal{L}_{sim} = -\frac{1}{N} \sum_{i=1}^{N} \sum_{j=1}^{C} \left[ y_{ij} \cdot \right.$$
$$\left. \log \frac{\exp\left(S(m'_i, t'_{j,\tilde{k}})\right)}{\exp\left(S(m'_i, t'_{j,\tilde{k}})\right) + \sum_{\substack{r \in \{1, \cdots C\}, k \in \{1, \cdots K\} \\ \{r,k\} \neq \{j,\tilde{k}\}}} \exp\left(S(m'_i, t'_{r,k})\right)} \right] \qquad (8)$$

wherein the positive text query for mask token $m'_i$ with ground truth class $j$ is defined as : $t'_{j,\tilde{k}}$ such that $k = \arg\max_{k \in \{1, \cdots, K\}} S(m'_i, t'_{j,k})$ and;

K is unique prompts shared across C classes.

In this example, all other text queries except the positive one (totaling K x C - 1) are treated as negative.

The contrastive loss function $L_{sim}$ may also be defined as follows:

$$\mathcal{L}_{sim} = -\frac{1}{N} \sum_{i=1}^{N} \sum_{j=1}^{C} \left[ y_{ij} \cdot \right.$$
$$\left. \log \frac{\exp\left(S(m'_i, t'_{j,\tilde{k}})\right)}{\exp\left(S(m'_i, t'_{j,\tilde{k}})\right) + \sum_{\substack{r \in \{1, \cdots C\}, k \in \{1, \cdots K\} \\ r \neq j}} \exp\left(S(m'_i, t'_{r,k})\right)} \right] \qquad (9)$$

In this example, text queries not belonging to the ground truth class (totaling K x (C- 1) are treated as negative.

The calculating module 13 may be implemented as software running on the training apparatus 10 or may be implemented partially or fully as hardware element of the training apparatus 10. In particular, the training apparatus 10 may comprise a program that includes the obtaining module 11, the augmenting module 12 and the calculating module 13. Alternatively and without limitation, the calculating module 13 may be realized as independent program (in particular, besides a program forming the obtaining module 11 and the augmenting module 12).

The aligning module 14 is a module configured to align each mask query that exhibits the highest pairwise similarity with the mask query and that relates to a same class label among the series of class label of the model. In other words the aligning module 14 is configured to align each mask query with the text query that exhibits the highest pairwise similarity. This alignment ensures that each mask query is associated with the most relevant textual description, specifically one that corresponds to the same class label within the model's series of class labels. By aligning mask queries with their most similar text queries, the semantic segmentation model learns to accurately assign class labels to image regions during training.

A person skilled in the art is capable of using established methods to make the aligning module 14 perform this alignment, for example by imposing an appropriately designed loss function that minimizes the distance between prediction and ground truth.

The aligning module 14 may be implemented as software running on the training apparatus 10 or may be implemented partially or fully as hardware element of the training apparatus 10. In particular, the training apparatus 10 may comprise a program that includes the obtaining module 11, the augmenting module 12, the calculating module 13 and the aligning module 14. Alternatively and without limitation, the aligning module 14 may be realized as independent program (in particular, besides a program forming the augmenting module 12, the obtaining module 11 and the calculating module 13).

The steps carried out by the training apparatus 10 are detailed hereinafter with respect to the corresponding training method, an embodiment of which is illustrated in Fig. 2.

Figure 2 is a flowchart of the training method 20 according to an embodiment of the present invention. The training method is performed for training the semantic segmentation model of the image. To this end, the training method 20 comprises a step 21 of obtaining a set of text queries and a set of mask queries for each class label of series of class label of the model. As described above, the step 21 may be performed by the obtaining module 11.

That is, the training method 20 further comprises a step 22 of augmenting the mask queries with both visual and textual information by processing the text queries, the mask queries and features of the image. This step 22 may be performed by the augmenting module 12 as described above.

Then, the training method 20 further comprises a step 23 of calculating a pairwise similarity between each augmented mask query and each text query. Such step 23 may be performed by the calculating module 13 as described above.

Finally, the training method 20 further comprises a step 24 of aligning each mask query with the text query that exhibits the highest pairwise similarity with the mask query and that relates to a same class label among the series of class label of the model. Such step 24 may be performed by the aligning module 14.

Optionally, the training method 20 may comprise another step 25, subsequent to step 24, of verifying the semantic segmentation of the image by using a labeled dataset. In this case, the training apparatus 10 may comprise a verifying module that is configured to perform the step 25 of the training method 20.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A method (20) for training a semantic segmentation model of an image, comprising:

   - a) obtaining (21) a set of text queries ($\hat{t}$) and a set of mask queries (m) for each class label of a series of class label of the model;
   - b) augmenting (22) the mask queries (m) with both visual and textual information by processing the text queries ($\hat{t}$), the mask queries (m) and features of the image;
   - c) calculating (23) a pairwise similarity between each augmented mask query and each text query ($\hat{t}$); and
   - d) aligning (24) each mask query (m) with the text query ($\hat{t}$) that exhibits the highest pairwise similarity with the mask query (m) and that relates to a same class label among the series of class label of the model.

2. The method (20) according to claim 1, comprising a step of verifying the semantic segmentation of the image by using a labeled dataset.

3. The method (20) according to claim 1 or 2, wherein augmenting the mask queries (m) comprises reducing the dimension of each text query ($\hat{t}$) in accordance with the scale of the mask queries, (m).

4. The method (20) according to any of claims 1 to 3, comprising concatenating the mask queries (m) and the text queries ($\hat{t}$) before processing them.

5. The method (20) according to any of claims 1 to 4, wherein augmenting the mask queries (m) comprises using a mask decoder transformer.

6. The method (20) according to claim 5, wherein augmenting the mask queries comprises executing cross-attention and self-attention strategies at each layer of the mask decoder transformer.

7. The method (20) according to any of claims 1 to 6, comprising projecting the augmented mask queries (m) and the text queries ($\hat{t}$) before performing the calculating step.

8. The method (20) according to any of claims 1 to 7, wherein the calculated pairwise similarity is refined through a contrastive loss function.

9. The method (20) according to any of claims 1 to 8, wherein the model is a language-guided semantic segmentation model.

10. A computer program set including instructions for executing the steps of the method of any of claims 1 to 9 when said program set is executed by at least one computer.

11. An apparatus (10) for training a semantic segmentation model of an image, comprising:

    - an obtaining module (11) configured to obtain a set of text queries ($\hat{t}$) and a set of mask queries (m) for each class label of series of class label of the model ;
    - an augmenting module (12) configured to augment the mask queries (m) with both visual and textual information by processing the text queries ($\hat{t}$), the mask queries (m) and the features of the image ;
    - a calculating module (13) configured to calculate a pairwise similarity between each augmented mask query and each text query ($\hat{t}$) ; and
    - an aligning module (14) configured to align each mask query (m) with the text query ($\hat{t}$) that exhibits the highest pairwise similarity with the mask query (m) and that relates to a same class label among the series of class label of the model.

12. A vehicle (1) comprising an apparatus (10) according to claim 11.

**Amended claims in accordance with Rule 137(2) EPC.**

1. A method (20) for training a semantic segmentation model of an image, comprising:

    - a) obtaining (21) a set of text queries ($\hat{t}$) and a set of mask queries (m) for each class label of a series of class label of the model;
    - b) augmenting (22) the mask queries (m) with both visual and textual information by processing the text queries ($\hat{t}$), the mask queries (m) and features of the image, wherein augmenting the mask queries (m) comprises reducing the dimension of each text query ($\hat{t}$) in accordance with the scale of the mask queries (m);
    - c) calculating (23) a pairwise similarity between each augmented mask query and each text query ($\hat{t}$); and
    - d) aligning (24) each mask query (m) with the text query ($\hat{t}$) that exhibits the highest pairwise similarity with the mask query (m) and that relates to a same class label among the series of class label of the model.

2. The method (20) according to claim 1, comprising a step of verifying the semantic segmentation of the image by using a labeled dataset.

3. The method (20) according to claim 1 or 2, comprising concatenating the mask queries (m) and the text queries ($\hat{t}$) before processing them.

4. The method (20) according to any of claims 1 to 3, wherein augmenting the mask queries (m) comprises using a mask decoder transformer.

5. The method (20) according to claim 4, wherein augmenting the mask queries comprises executing cross-attention and self-attention strategies at each layer of the mask decoder transformer.

6. The method (20) according to any of claims 1 to 5, comprising projecting the augmented mask queries (m) and the text queries ($\hat{t}$) before performing the calculating step.

7. The method (20) according to any of claims 1 to 6, wherein the calculated pairwise similarity is refined through a contrastive loss function.

8. The method (20) according to any of claims 1 to 7, wherein the model is a language-guided semantic segmentation model.

9. A computer program set including instructions for executing the steps of the method of any of claims 1 to 8 when said program set is executed by at least one computer.

10. An apparatus (10) for training a semantic segmentation model of an image, comprising:

- an obtaining module (11) configured to obtain a set of text queries ($\hat{t}$) and a set of mask queries (m) for each class label of series of class label of the model ;
- an augmenting module (12) configured to augment the mask queries (m) with both visual and textual information by processing the text queries ($\hat{t}$), the mask queries (m) and the features of the image; the augmenting module (12) being configured to reduce the dimension of each text query ($\hat{t}$) in accordance with the scale of the mask queries (m) when augmenting the mask queries (m) ;
- a calculating module (13) configured to calculate a pairwise similarity between each augmented mask query and each text query ($\hat{t}$) ; and
- an aligning module (14) configured to align each mask query (m) with the text query ($\hat{t}$) that exhibits the highest pairwise similarity with the mask query (m) and that relates to a same class label among the series of class label of the model.

11. A vehicle (1) comprising an apparatus (10) according to claim 10.

**FIG.1**

**FIG.2**

Europäisches
Patentamt

European
Patent Office

Office européen
des brevets

## EUROPEAN SEARCH REPORT

**Application Number**

EP 24 17 9139

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG YIFAN ET AL: "Attentive Mask CLIP", 2023 IEEE/CVF INTERNATIONAL CONFERENCE ON COMPUTER VISION (ICCV), IEEE, 31 October 2023 (2023-10-31), pages 2759-2769, XP034515869, DOI: 10.1109/ICCV51070.2023.00260 [retrieved on 2024-01-15] * the whole document * | 1-12 | INV. G06V10/764 G06V10/774 G06V10/82 G06V20/70 |
| X | Zhang Zicheng ET AL: "CoupAlign: Coupling Word-Pixel with Sentence-Mask Alignments for Referring Image Segmentation", 36th Conference on Neural Information Processing Systems (NeurIPS 2022), 31 December 2022 (2022-12-31), XP093214505, Retrieved from the Internet: URL:https://proceedings.neurips.cc/paper_files/paper/2022/hash/5e773d319e310f1e4d695159484143b8-Abstract-Conference.html [retrieved on 2024-10-14] | 1-4,7-12 | |
| A | * the whole document * | 5,6 | TECHNICAL FIELDS SEARCHED (IPC) G06V |
| A | US 2024/161520 A1 (LI JUNNAN [SG] ET AL) 16 May 2024 (2024-05-16) * the whole document * | 1-12 | G06T |

The present search report has been drawn up for all claims

| Place of search | Date of completion of the search | Examiner |
|---|---|---|
| The Hague | 14 October 2024 | Valencia, Erika |

EPO FORM 1503 03.82 (P04C01)

## ANNEX TO THE EUROPEAN SEARCH REPORT
## ON EUROPEAN PATENT APPLICATION NO.

EP 24 17 9139

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2024

| Patent document cited in search report | Publication date | Patent family member(s) | Publication date |
|---|---|---|---|
| US 2024161520 A1 | 16-05-2024 | US 2024160853 A1 | 16-05-2024 |
| | | US 2024161520 A1 | 16-05-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALEC RADFORD** ; **JONG WOOK KIM** ; **CHRIS HALLACY** ; **ADITYA RAMESH** ; **GABRIEL GOH** ; **SANDHINI AGARWAL** ; **GIRISH SASTRY** ; **AMANDA ASKELL** ; **PAMELA MISHKIN** ; **JACK CLARK et al.** Learning transferable visual models from natural language supervision. In international conference on machine learning. *PMLR*, 2021, 8748-8763